# EUROPEAN PATENT SPECIFICATION

(11) **EP 3 334 115 B1**
(45) Date of publication and mention of the grant of the patent: **09.10.2019**
(21) Application number: 16202699.1
(22) Date of filing: 07.12.2016
(51) Int. Cl.: H04L 29/06

(54) **USER AUTHENTICATION BASED ON TOKEN**
BENUTZERAUTHENTIFIZIERUNG AUF EINEM TOKEN BASIEREND
AUTHENTIFICATION D'UTILISATEUR BASÉE SUR UN JETON

(43) Date of publication of application: 13.06.2018
(73) Proprietor: Swisscom AG, 3050 Bern (CH)
(72) Inventor: Hau, Thorsten, 3126 Kaufdorf (CH); Sarimbekov, Aibek, 8003 Zurich (CH); Scharnofske, Alexander, 3006 Bern (CH)
(74) Representative: Vesterinen, Jussi Tapio

(56) References cited:
- WO-A1-2016/186755
- US-A1- 2011 030 047
- US-A1- 2013 252 583
- US-B1- 9 413 756

## Description

### TECHNICAL FIELD

The present invention relates to a method of authenticating a user in a communication network, such as the internet. The invention also relates to a web server, to a network element and to a communication network with which the method can be implemented.

### BACKGROUND OF THE INVENTION

Hypertext transfer protocol (HTTP) header enrichment allows network operators to annotate HTTP connections via the use of a wide range of headers. Network operators employ proxies to introduce such headers for operational purposes, and also to assist advertising programs in identifying the network user responsible for the originating traffic, with significant consequences for the user's privacy. Thanks to the HTTP header enrichment, network operators can append information into HTTP traffic (typically at least the mobile station international subscriber directory number (MSISDN)) to enable attribution of network resources to specific users, performance enhancement, analytics, and content access control and customisation. Furthermore, the network operators can monetise their network and user base through advertising programs by taking advantage of their position to inject unique tracking identifiers into every HTTP request, popularly known as "super-cookies".

However, HTTP header enrichment can have serious consequences for millions of mobile subscribers all over the world. Standardisation efforts and best practices suggest that service providers should remove header enrichment at their network boundary to prevent privacy leaks. However, in reality, the injected HTTP headers are often not removed. This means that any web server visited from a mobile device can use this information for purposes adverse to user interests, such as user discrimination and online tracking. Network users lack legal protections against these practices, which happen in a manner invisible to most of them. Furthermore, typical network users lack the mechanisms and knowledge to prevent operators from performing header injection and to stop online services from collecting their information. Generally speaking, too much traffic is header enriched, even if web servers do not request the header enrichment. More importantly, header enrichment does not work with HTTP secure (HTTPS), since adding or removing any header data would break the end-to-end encryption between the user and a web server.

WO2016186755 (A1) discloses a method and proxy device for securing an access to a cloud-based application. The method includes receiving an authentication token, wherein the authentication token includes an identity of a user of a client device requesting an access to the cloud-based application; receiving, from an agent executed in the client device, a client certificate; retrieving, from a compliance server, a device posture of the client device, wherein the device posture is retrieved respective of the received client certificate; identifying an access policy for the client device to access the cloud-based application, wherein the access policy is identified based at least on the retrieved device posture; and determining whether to grant an access to the cloud-based application based in part on the compliance of the client device with the identified access policy.

US2013/252583 discloses an authentication server and methods of generating a token for use by a mobile device to establish authorisation for the mobile device to access a service provided by a service server. The method comprises receiving a request for the token from the mobile device, generating the token comprising location data identifying a location for the mobile device and authentication data indicating a level of access that the mobile device is permitted to have to the service provided by the service server, and transmitting the token to the mobile device.

US9413756 discloses systems and methods in which an intermediary server provides a proxy token value in lieu of a stable token value to a third-party. The intermediary server identifies a stable token value associated with a first-party and accesses a knowledge base to determine a length of time since a third-party used a first proxy token value in a prior action, where the first proxy token value had previously been presented to the third-party in lieu of the stable token value. The intermediary server determines that the length of time since the third-party used the proxy token value in the prior action exceeds a maximum reliability time threshold and, responsive to the determination, generates a second proxy token value. The intermediary server then provides, to the third-party, an invitation to use the second proxy token value in an action, the invitation omitting the stable token value and the first proxy token value.

### SUMMARY OF THE INVENTION

It is an object of the present invention to overcome at least some of the problems identified above and to avoid header enrichment in communication systems.

According to a first aspect of the invention, there is provided a method for authenticating a user terminal as recited in claim 1.

The proposed new solution has the advantage that the user can be authenticated without the need to modify the HTTPS traffic between the user terminal and the web server. There is also no need for a second (secure) channel, such as a short message service (SMS) channel. For this reason, the user terminal does not need to be a phone. It can simply have any web browser which allows it to access the web server. The method is also very efficient, because the identification token will only be generated and sent to the web server (by the token generator) in response to a specific request from the web server. Also, the web page does not need to contain any unsecure HTTP components (all the web page components can be HTTPS components). In other words, when loading the web page, all the communications between the web server and the user terminal can be based on HTTPS. Furthermore, by implementing the method, header enrichment can be avoided.

According to a second aspect of the invention, there is provided a communication network arranged to carry out the method according to the first aspect of the present invention.

Other aspects of the invention are recited in the dependent claims attached hereto.

### BRIEF DESCRIPTION OF THE DRAWINGS

Other features and advantages of the invention will become apparent from the following description of a non-limiting example embodiment, with reference to the appended drawings, in which:
- Figure 1 is a simplified block diagram illustrating some elements of a communication network according to an example of the present invention;

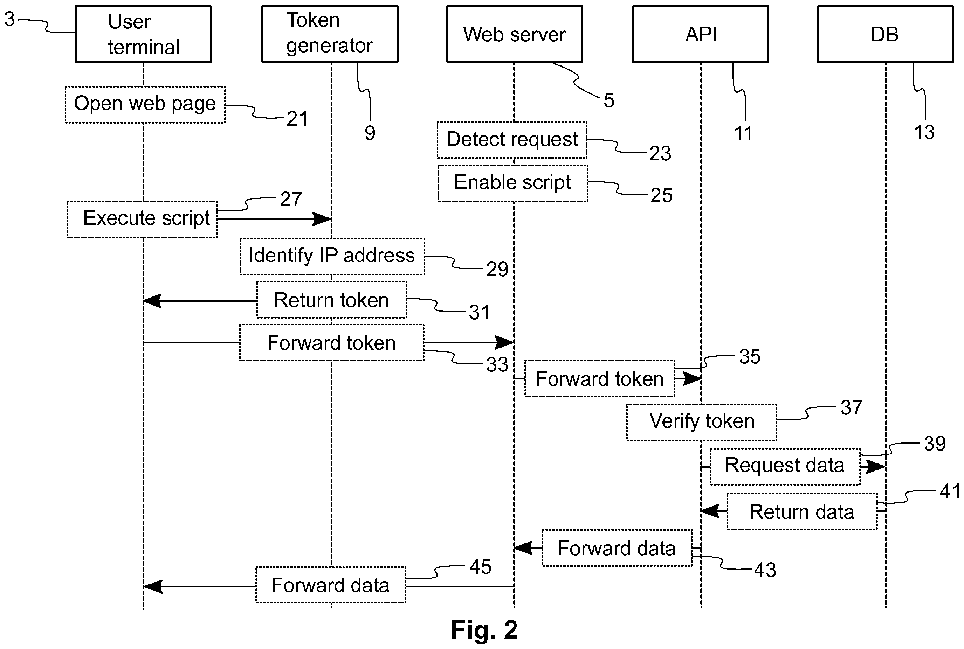

- Figure 2 is a flow chart summarising the method of authenticating a communication party in a communication network according to a first example of the present invention; and
- Figure 3 is a flow chart summarising the method of authenticating a communication party in a communication network according to a second example of the present invention.

### DETAILED DESCRIPTION OF AN EMBODIMENT OF THE INVENTION

An embodiment of the present invention will now be described in detail with reference to the attached figures. This non-limiting embodiment is described in the context of a communication or computer network that uses internet protocol (IP) to link devices of the communication network. However, the teachings of the present invention are not limited to this environment. The method of the present invention may be used to identify and/or to authenticate a communication party in a communication network. This is beneficial for example when carrying out web transactions including online shopping. Identical or corresponding functional and structural elements which appear in the different drawings are assigned the same reference numerals.

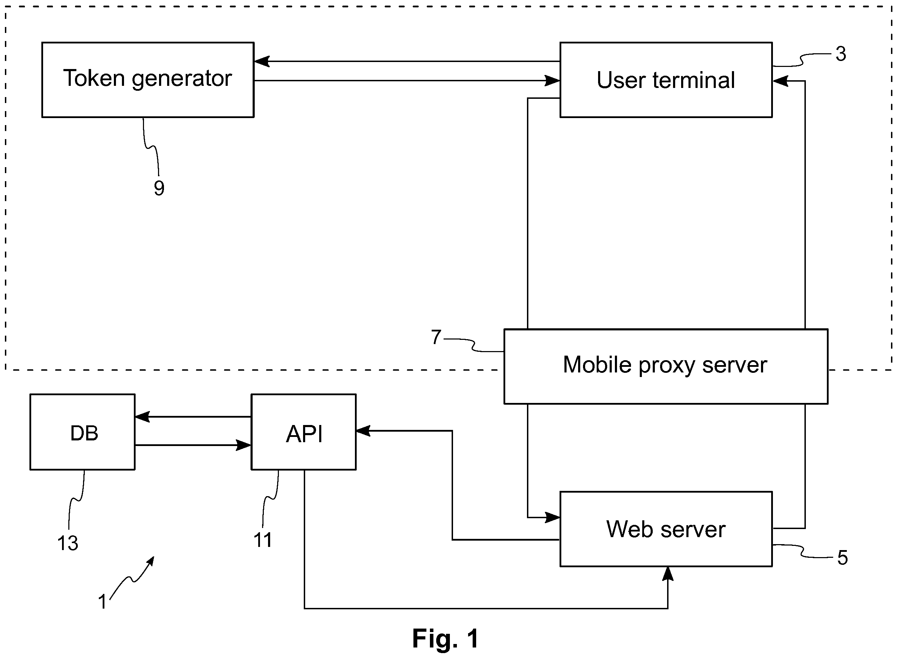

Figure 1 shows in a simplified manner a communication network 1 where the teachings of the present invention can be applied. The communication network 1 may be a wireless network of a wired network. In the network, there is shown a portable communication device 3, referred to as a user or subscriber terminal or simply a terminal, which may be a mobile smart phone, for example. In this example, the user terminal 3 is the only wireless element in the network 1. The user terminal 3 comprises a web browser for browsing web pages on the internet forming a global system of interconnected computer networks that use the IP to link devices worldwide by a broad array of electronic, wireless and/or optical networking technologies. A web browser is a software application for retrieving, presenting, and traversing information resources on the world wide web. In this example, the user terminal 3 is arranged to load web sites from a third party web server 5. As shown in Figure 1, in this example, all the traffic between the user terminal 3 and the third party server 5 transits via a mobile proxy server 7, referred to as a mobile proxy. The mobile proxy 7 is configured to carry out for instance network address translation (NAT), which is a method of remapping one IP address space into another by modifying network address information in IP datagram packet headers while they are in transit across a traffic routing device, in this example the mobile proxy 7. In a network operating in a traditional manner, the mobile proxy would also typically implement the header enrichment. However, according to the present invention, header enrichment is not needed.

In Figure 1, there is further shown a token generation server 9, referred to as a token generator, for generating a data element, referred to as an identification token or token, as explained later in more detail. According to the first example of the present invention, the token generator 9 is arranged to communicate bidirectionally with the user terminal 3 or with other user terminals (not illustrated in Figure 1). According to the first example of the present invention, the token generator 9 is not arranged to communicate with other types of communication network elements such as the web server 5. According to the second example of the present invention, the token generator 9 is arranged to receive data from the user terminal 3 and directly send the token to the web server 5 via the mobile proxy 7.

A network processing unit 11, in this example an application programming interface (API), is arranged to bidirectionally communicate with the web server 5, while a database (DB) 13 is arranged to bidirectionally communicate with the API 11, as explained later in more detail. The database 13 comprises a table listing network addresses, in this case IP addresses of a given IP range (for example the IP address range of the network operator to which the database belongs) linked to a particular user terminal. In other words, each IP address in the database 13 is linked to an identifier (eg an identification number) of a user terminal or its subscriber identity module. The identifier may be an MSISDN, for example. The IP address-identifier pair further has an associated time stamp indicating a time instant when a particular IP address was used by a user terminal of a particular subscriber identity module, or a time period in which a particular IP address was used by a user terminal of a particular subscriber identity module. The token generator 9 does not need any persistent data storage. This means that once it has issued and sent a token, the token can be deleted and there is no need to store it any longer. It is to be noted that there is typically one mobile proxy 7, one token generator 9, one API 11 and one database 13 per network operator. Furthermore, it is possible that the API 11 and the database 13 are one physical element instead of two separate physical elements as shown in the figures. However, in the example shown in Figure 1, all the illustrated network elements are all physically separate network elements.

The flow chart of Figure 1 illustrates the method of the present invention according to the first example. In step 21, the user of the user terminal 3 opens a web page located at the web server 5. The user requests the web page content from the web server 5. In step 23, the web server 5 detects that the request is coming through the NAT (and has a certain IP address range). It is to be noted that the network elements inside the boundary defined by the dashed line in Figure 1 all have the same IP address range, ie they belong to the same network or sub-network. This zone may be considered to be a demilitarized zone (in computing terms), which is a physical and/or logical sub-network. In step 25, the web server 5 enables a script, such as a Java script, to enable the user terminal 3 to access the token generator 9. Alternatively, web server issues a (uniform resource locator (URL)) redirect command to redirect the user terminal 3 to the token generator 9 to request the identification token from the token generator 9. In step 27, the user terminal 3 executes the script and sends a request to the token generator 9. More specifically, the execution of the script triggers the user terminal 3 to send the request to the token generator 9. If the sole purpose of the token generator 9 is to issue and deal with tokens, then the request sent in step 27 may not need to take any parameters (eg the request could simply be "get()", ie it may be an empty HTTP or HTTPS request), because the token generator 9 would interpret any message it receives as a request to issue a token.

In step 29, the token generator 9 identifies the private IP address of the user terminal 3. The IP address may be detected eg from the request received from the user terminal 3. In step 31, the token generator 9 generates a token and sends it to the user terminal 3. The token is generated from the IP address of the user terminal 3 and a time stamp indicating the time when the user terminal 3 used the IP address. In other words, the token comprises the IP address of the user terminal 3 and the time stamp for the IP address. The token can be considered to be a function of the time and IP address valid at that moment. It is to be noted that since the user terminal 3 is a mobile terminal, its IP address may change frequently. In step 33, the user terminal 3 receives the token and forwards it to the web server 5 via the mobile proxy 7. The communications between the user terminal 3 and the token generator 9 may be encrypted. Separate transportation encryption and token encryption may be used. Thus, the elements in the network 1 may use secure protocols to exchange the token. Encryption may also be used for the communications between the user terminal 3 and the web server 5. In this example, the token is encrypted by the token generator 9 with a public key of the API 11. Thus, in this example, the only entity capable of decrypting the token is the API 11. The token generator 9 (or other elements encrypting data) may use a strong encryption with salt for example to avoid attacks against the encryption. If such a strong encryption is not used, an attacker can retrieve many tokens in a very short time, and could possibly guess that only one byte/bit changes. This could be an attack vector. However, if a salt is used, many bits change. Salting means adding a random number to the token content so that a brute force attacker cannot guess the password used to encrypt the data. A salt is random data that is used as an additional input to a one-way function that hashes a passphrase or password. Instead of salt, another random number or pseudorandom number generator may be used to make the encryption stronger.

In step 35, the web server 5 generates a request using the token as a query parameter and sends the request to the API 11. This step may also include first decrypting the message received from the user terminal 3 and then encrypting the request to be sent to the API 11. In step 37, the API receives the request and verifies its freshness (using the time stamp) and that it is from a recognized partner (eg that the web server belongs to the same network operator as the API 11). This step may also comprise decrypting the request if the request is encrypted to extract the IP address and time stamp. In step 39, the API 11 sends an identification request (to receive subscriber information) to the database 13. In this example, the identification request uses the IP address and time stamp to query the database 13. In this example, the API 11 is interested in the MSISDN of the user terminal 3. Thus, the identification request in this example indicates that the API 11 queries the MSISDN of the user terminal 3 to which the token relates or is associated. It is also possible, that the MSISDN (or another parameter instead) is returned by default every time the database 13 receives a request from the API 11. Since the connection between the API 11 and the database 13 is secured, there may not be any need to encrypt the communications between these two elements.

In step 41, the database 13 fetches the requested information associated with the token and sends it to the API 11. As explained earlier, the database 13 knows when a particular user terminal 3 used a particular IP address. The database 13 may store supplementary user information or data relating to a particular user terminal or to its subscriber identity module. The further information may comprise eg the name, postal and/or home address, email address, secondary phone number, birthday, user terminal hardware identifier, preferred payment method, payment card details etc. In step 43, the API 11 forwards the requested information to the web server 5 and preferably encrypts (eg with the public key of the web server 5) the information before sending it. Now the web server 5 has identified or authenticated the user terminal 3. In step 45, in this example, the web server 5 forwards at least part of the information to the user terminal 3. Alternatively or additionally, the information could also be used by the web server 5 for tracking and/or statistics etc. If the web server 5 only received the MSISDN for example, then it may request at least some of the supplementary information relating or associated to the MSISDN before forwarding the information to the user terminal 3.

The above method may be used as an authentication method for transactions or web services. In the above process, the token may be transported in an HTTP or HTTPS payload between various network elements. It is to be noted that HTTP or HTTPS messages comprise a payload portion for the data content which needs to be transferred and an overhead portion or header, different from the payload portion. The method allows the web server 5 to reliably authenticate the user of the user terminal 3. A major advantage of the method is that the user terminal 3 from which a HTTP(S) stream originates can be unambiguously identified without user interaction. The method may be triggered for example if the user clicks on a specific link on a web page. The link may be a confirmation to buy an item online, for instance. In this case, in step 45, the web server 5 would send some data relating to the subscriber to the user terminal 3 so that the browser of the user terminal could automatically fill in a form relating to the transaction. The form could have fields for the same information as the web server 5 received from the database 13 (via the API 11). Furthermore, the web server 5 and the user terminal 3 can be confident that the information provided is correct and accurate since the information was obtained from a reliable source (the database 13).

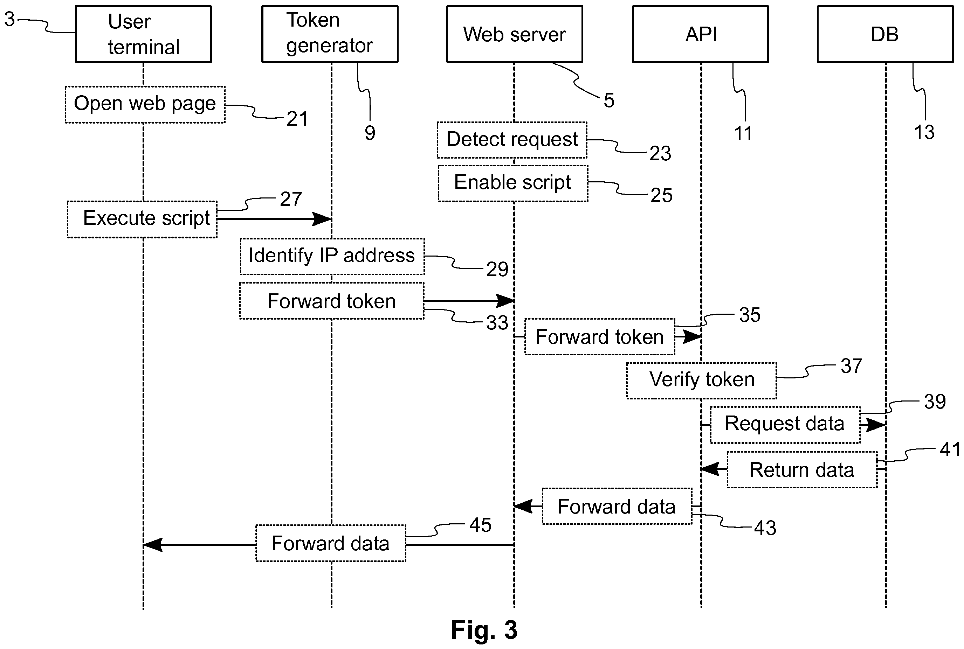

The flow chart of Figure 3 illustrates the method of the present invention according to the second example. The process according to this variant is very similar to the process of the first example. The difference now is that, according to the second example, the token generator 9 does not send the token to the user terminal 3. In this variant, in step 33, the token generator 9 sends the token directly to the web server 5. Furthermore, according to this variant, a session identifier (ID) of the browsing session is used in the process to make sure that various messages are linked to the correct browsing session. In this example, the session ID is included in the messages sent in steps 27, 33 and 45. It is to be noted that according to the first example, the session ID may not be needed. According to a further variant of the present invention, the token generator 9 communicates directly with the API 11 and the database 13 and then sends the payload (eg the MSISDN) to the user terminal 3 or to the web server 5. In this variant, the token is not received by the API 11 via the web server 5. Also in this variant, the session ID may be used in a manner similar to what was explained above. This variant assumes that the token generator 9 knows how to directly reach the API 11.

According to one example of the present invention, the operation of the web server 5 can be summarised in the following manner. The web server 5 receives a first request from the user terminal 3 to load a web page. The web server instructs the user terminal 3 to request an identification token from the token generator 9. The web server 5 receives the identification token issued by the token generator 9, the identification token comprising a network address associated with a time stamp indicating when the network address was used by the user terminal 3. The web server 5 sends a second request comprising the identification token to the processing unit 11. The web server 5 receives user authentication information relating to the identification token from the network processing unit 11 to authenticate the communication network user.

The present invention also relates to a computer program product arranged to execute the method described above. The computer program product may be run by the web server 5 and/or by the network processing unit 11.

While the invention has been illustrated and described in detail in the drawings and foregoing description, such illustration and description are to be considered illustrative or exemplary and not restrictive, the invention being not limited to the disclosed embodiment. For example, it would be also possible to determine a unique user terminal ID, such as a media access control (MAC) address of the user terminal 3, to authenticate the user terminal 3.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method for authenticating a user terminal (3) in a communication network (1), the communication network (1) further comprising a web server (5), a token generator (9), a database (13) and a network processing unit (11), the method comprising:
• the network processing unit (11) receiving (35) an identification token issued by the token generator (9) in response to the user terminal (3) loading a web page from the web server (5), the identification token comprising a network address associated with a time stamp indicating when the user terminal (3) was using the network address;
• the network processing unit (11) accessing (39) the database (13), which stores information about when the user terminal was using a particular network address;
• the network processing unit (11) receiving (41) user authentication information associated with the network address and the time stamp from the database, the user authentication information comprising a unique communication network user identifier;
• the network processing unit (11) sending (43) the user authentication information to the web server (5) for authenticating the user terminal (3).

2. A method according to claim 1, wherein, before the network processing unit (11) receives the identification token, the method further comprises:
• the web server (5) receiving (21) a first request from the user terminal (3) to load a web page; and
• the web server instructing (25) the user terminal (3) to request an identification token from the token generator (9).

3. A method according to claim 2, wherein the method further comprises, in response to the first request, the web server (5) enabling a script to be executed by the user terminal (3) or issues a redirect command to redirect the user terminal (3) to the token generator (9) to request the identification token from the token generator (9).

4. A method according to claim 3, wherein the execution of the script triggers the user terminal (3) to request the identification token from the token generator (9).

5. A method according to any one of the preceding claims, wherein the network address is an internet protocol address.

6. A method according to any one of the preceding claims, wherein the unique communication network user identifier is a mobile station international subscriber directory number.

7. A method according to any one of the preceding claims, wherein the user authentication information further comprises at least one of the following: name of the user, physical address of the user, email address of the user, secondary phone number of the user, user terminal identifier, birthday of the user, preferred payment method of the user and payment card details of the user.

8. A method according to any one of the preceding claims, wherein the method further comprises the network processing unit (11) accessing (39) a database (13) to obtain the user authentication information.

9. A method according to claim 8, wherein the database (13) comprises a table of network addresses linked to a particular network user and to a time stamp.

10. A method according to any one of the preceding claims, wherein, before the network processing unit (11) receives the identification token, the method further comprises:
• the web server (5) receiving (33) the identification token issued by the token generator (9); and
• the web server (5) sending (35) a second request comprising the identification token to the network processing unit (11).

11. A method according to claim 10, wherein the web server (5) receives the identification token via a network address translator unit (7) directly from the token generator (9).

12. A method according to claim 10 or 11, wherein the identification token is received together with a session identifier of a web browsing session of the user terminal (3).

13. A method according to any one of the preceding claims, wherein the method further comprises the token generator (9) encrypting the identification token with a public key of the network processing unit (11).

14. A communication network (1) for authenticating a user terminal (3) in the communication network (1) further comprising a network processing unit (11), a database (13), a token generator (9) and a web server (5), the communication network (1) being detailed by:
• the network processing unit (11) comprises means for receiving (35) an identification token issued by the token generator (9) in response to the user terminal (3) loading a web page from the web server (5), the identification token comprising a network address associated with a time stamp indicating when the user terminal (3) was using the network address;
• the network processing unit (11) comprises means for accessing the database, which stores information about when the user terminal was using a particular network address;
• the network processing unit (11) comprises means for receiving (41) user authentication information associated with the network address and the time stamp from the database, the user authentication information comprising a unique communication network user identifier;
• the network processing unit (11) comprises means for sending (43) the user authentication information to the web server (5) for authenticating the user terminal (3).

## Patentansprüche

1. Verfahren zum Authentifizieren eines Endgeräts (3) in einem Kommunikationsnetzwerk (1), wobei das Kommunikationsnetzwerk (1) ferner einen Webserver (5), einen Tokengenerator (9), eine Datenbank (13) und eine Netzwerkverarbeitungseinheit (11) umfasst, wobei das Verfahren umfasst:
• Empfangen (35), durch die Netzwerkverarbeitungseinheit (11), eines Identifikationstokens, das vom Tokengenerator (9) als Reaktion darauf ausgegeben wird, dass das Endgerät (3) eine Webseite vom Webserver (5) lädt, wobei das Identifikationstoken eine Netzwerkadresse umfasst, die mit einem Zeitstempel assoziiert ist, der anzeigt, wann das Endgerät (3) die Netzwerkadresse verwendet hat;
• Zugreifen (39), durch die Netzwerkverarbeitungseinheit (11), auf die Datenbank (13), die Informationen darüber speichert, wann das Endgerät eine bestimmte Netzwerkadresse verwendet hat;
• Empfangen (41), durch die Netzwerkverarbeitungseinheit (11), von Benutzerauthentifizierungsinformationen, die mit der Netzwerkadresse und dem Zeitstempel von der Datenbank assoziiert sind, wobei die Benutzerauthentifizierungsinformationen eine eindeutige Kommunikationsnetzwerkbenutzerkennung umfassen;
• Senden (43) der Benutzerauthentifizierungsinformationen zum Authentifizieren des Endgeräts (3) durch die Netzwerkverarbeitungseinheit (11) an den Webserver (5).

2. Verfahren nach Anspruch 1, wobei das Verfahren ferner umfasst, bevor die Netzwerkverarbeitungseinheit (11) das Identifikationstoken empfängt:
• Empfangen (21) einer ersten Anforderung vom Endgerät (3) durch den Webserver (5), eine Webseite zu laden; und
• Anweisen (25) des Endgeräts (3) durch den Webserver, ein Identifikationstoken vom Tokengenerator (9) anzufordern.

3. Verfahren nach Anspruch 2, wobei das Verfahren ferner als Reaktion auf die erste Anforderung ein Aktivieren eines Skripts, das vom Endgerät (3) auszuführen ist, oder ein Erteilen eines Umleitungsbefehls, um das Endgerät (3) an den Tokengenerator (9) umzuleiten, durch den Webserver (5) umfasst, um das Identifikationstoken vom Tokengenerator (9) anzufordern.

4. Verfahren nach Anspruch 3, wobei die Ausführung des Skripts auslöst, dass das Endgerät (3) das Identifikationstoken vom Tokengenerator (9) anfordert.

5. Verfahren nach einem der vorangehenden Ansprüche, wobei die Netzwerkadresse eine Internetprotokolladresse ist.

6. Verfahren nach einem der vorangehenden Ansprüche, wobei die eindeutige Kommunikationsnetzwerkbenutzerkennung eine internationale Teilnehmerverzeichnisnummer einer Mobilstation ist.

7. Verfahren nach einem der vorangehenden Ansprüche, wobei die Benutzerauthentifizierungsinformationen ferner mindestens eines von Folgendem umfassen: Name des Benutzers, physische Adresse des Benutzers, E-Mail-Adresse des Benutzers, sekundäre Telefonnummer des Benutzers, Endgerätekennung, Geburtstag des Benutzers, bevorzugtes Zahlungsverfahren und Zahlungskartendetails des Benutzers.

8. Verfahren nach einem der vorangehenden Ansprüche, wobei das Verfahren ferner ein Zugreifen (39) auf eine Datenbank (13) durch die Netzwerkverarbeitungseinheit (11) umfasst, um die Benutzerauthentifizierungsinformationen zu erhalten.

9. Verfahren nach Anspruch 8, wobei die Datenbank (13) eine Tabelle von Netzwerkadressen umfasst, die mit einem bestimmten Netzwerkbenutzer und einem Zeitstempel verknüpft sind.

10. Verfahren nach einem der vorangehenden Ansprüche, wobei das Verfahren ferner umfasst, bevor die Netzwerkverarbeitungseinheit (11) das Identifikationstoken empfängt:
• Empfangen (33) des vom Tokengenerator (9) ausgegeben Identifikationstokens durch den Webserver (5); und
• Senden (35) einer zweiten Anforderung, die das Identifikationstoken umfasst, an die Netzwerkverarbeitungseinheit (11) durch den Webserver (5).

11. Verfahren nach Anspruch 10, wobei der Webserver (5) das Identifikationstoken direkt vom Tokengenerator (9) über eine Netzwerkadressenübersetzungseinheit (7) empfängt.

12. Verfahren nach Anspruch 10 oder 11, wobei das Identifikationstoken zusammen mit einer Sitzungskennung einer Webbrowsing-Sitzung des Endgeräts (3) empfangen wird.

13. Verfahren nach einem der vorangehenden Ansprüche, wobei das Verfahren ferner ein Verschlüsseln des Identifikationstokens mit einem öffentlichen Schlüssel der Netzwerkverarbeitungseinheit (11) durch den Tokengenerator (9) umfasst.

14. Kommunikationsnetzwerk (1) zum Authentifizieren eines Endgeräts (3) im Kommunikationsnetzwerk (1), das ferner eine Netzwerkverarbeitungseinheit (11), eine Datenbank (13), einen Tokengenerator (9) und einen Webserver (5) umfasst, wobei das Kommunikationsnetzwerk (1) im Einzelnen **gekennzeichnet ist, dadurch**:
• dass die Netzwerkverarbeitungseinheit (11) Mittel zum Empfangen (35) eines Identifikationstokens umfasst, das vom Tokengenerator (9) als Reaktion darauf ausgegeben wird, dass das Endgerät (3) eine Webseite vom Webserver (5) lädt, wobei das Identifikationstoken eine Netzwerkadresse umfasst, die mit einem Zeitstempel assoziiert ist, der anzeigt, wann das Endgerät (3) die Netzwerkadresse verwendet hat;
• dass die Netzwerkverarbeitungseinheit (11) Mittel zum Zugreifen auf die Datenbank umfasst, die eine Information darüber speichert, wann das Endgerät eine bestimmte Netzwerkadresse verwendet hat;
• dass die Netzwerkverarbeitungseinheit (11) Mittel zum Empfangen (41) von Benutzerauthentifizierungsinformationen umfasst, die mit der Netzwerkadresse und dem Zeitstempel von der Datenbank assoziiert sind, wobei die Benutzerauthentifizierungsinformationen eine eindeutige Kommunikationsnetzwerkbenutzerkennung umfassen;
• dass die Netzwerkverarbeitungseinheit (11) Mittel zum Senden (43) der Benutzerauthentifizierungsinformationen zum Authentifizieren des Endgeräts (3) an den Webserver (5) umfasst.

## Revendications

1. Un procédé pour authentifier un terminal d'utilisateur (3) dans un réseau de communication (1), le réseau de communication (1) comprenant en outre un serveur Web (5), un générateur de jetons (9), une base de données (13) et une unité de traitement de réseau (11), le procédé comprenant :
• l'unité de traitement de réseau (11) recevant (35) un jeton d'identification émis par le générateur de jetons (9) en réponse au chargement par le terminal de l'utilisateur (3) d'une page Web en provenance du serveur Web (5), le jeton d'identification comprenant une adresse réseau associée à un horodatage indiquant le moment où l'adresse réseau a été utilisée par le terminal de l'utilisateur (3) ;
• l'unité de traitement de réseau (11) accédant (39) à la base de données (13), qui sauvegarde des informations concernant le moment où le terminal de l'utilisateur a utilisé une adresse réseau spécifique ;
• l'unité de traitement de réseau (11) recevant (41) des informations d'authentification de l'utilisateur associées à l'adresse réseau et à l'horodatage depuis la base de données, les informations d'authentification de l'utilisateur comprenant un identifiant d'utilisateur de réseau de communication unique ;
• l'unité de traitement de réseau (11) envoyant (43) les informations d'authentification de l'utilisateur au serveur Web (5) pour authentifier le terminal de l'utilisateur (3).

2. Un procédé selon la revendication 1, dans lequel, avant que l'unité de traitement de réseau (11) ne reçoive le jeton d'identification, le procédé comprend en outre les étapes suivantes :
• le serveur Web (5) recevant (21) une première demande de chargement d'une page Web en provenance du terminal de l'utilisateur (3) ; et
• le serveur Web ordonnant (25) au terminal de l'utilisateur (3) de demander un jeton d'identification au générateur de jetons (9).

3. Un procédé selon la revendication 2, dans lequel le procédé comprend en outre, en réponse à la première demande, le serveur Web (5) permettant l'exécution d'un script par le terminal de l'utilisateur (3) ou émettant une commande de redirection pour rediriger le terminal de l'utilisateur (3) vers le générateur de jetons (9) pour demander le jeton d'identification au générateur de jetons (9).

4. Un procédé selon la revendication 3, dans lequel l'exécution du script amène le terminal de l'utilisateur (3) à demander le jeton d'identification au générateur de jetons (9).

5. Un procédé selon l'une quelconque des revendications précédentes, dans lequel l'adresse réseau est une adresse de protocole Internet.

6. Un procédé selon l'une quelconque des revendications précédentes, dans lequel l'identifiant d'utilisateur de réseau de communication unique est un numéro de répertoire international d'abonné de station mobile.

7. Un procédé selon l'une quelconque des revendications précédentes, dans lequel les informations d'authentification de l'utilisateur comprennent en outre au moins l'un des éléments suivants : nom de l'utilisateur, adresse physique de l'utilisateur, adresse électronique de l'utilisateur, numéro de téléphone secondaire de l'utilisateur, identifiant de terminal de l'utilisateur, date de naissance de l'utilisateur, méthode de paiement préférée de l'utilisateur et détails de la carte de paiement de l'utilisateur.

8. Un procédé selon l'une quelconque des revendications précédentes, dans lequel le procédé comprend en outre l'unité de traitement de réseau (11) accédant (39) à une base de données (13) pour obtenir les informations d'authentification de l'utilisateur.

9. Un procédé selon la revendication 8, dans lequel la base de données (13) comprend un tableau d'adresses réseau liée à un utilisateur de réseau particulier et à un horodatage.

10. Un procédé selon l'une quelconque des revendications précédentes, dans lequel, avant que l'unité de traitement de réseau (11) ne reçoive le jeton d'identification, le procédé comprend en outre les étapes suivantes :
• le serveur Web (5) recevant (33) le jeton d'identification émis par le générateur de jetons (9) ; et
• le serveur Web (5) envoyant (35) une deuxième demande comprenant le jeton d'identification à l'unité de traitement de réseau (11).

11. Un procédé selon la revendication 10, dans lequel le serveur Web (5) reçoit le jeton d'identification via une unité de traduction d'adresses réseau (7) directement du générateur de jetons (9).

12. Un procédé selon la revendication 10 ou 11, dans lequel le jeton d'identification est reçu avec un identifiant de session d'une session de navigation sur le Web du terminal de l'utilisateur (3).

13. Un procédé selon l'une quelconque des revendications précédentes, dans lequel le procédé comprend en outre le générateur de jetons (9) cryptant le jeton d'identification avec une clé publique de l'unité de traitement de réseau (11).

14. Un réseau de communication (1) pour authentifier un terminal d'utilisateur (3) dans le réseau de communication (1) comprenant en outre une unité de traitement de réseau (11), une base de données (13), un générateur de jetons (9) et un serveur Web (5), le réseau de communication (1) étant détaillé comme suit :
• l'unité de traitement de réseau (11) comprend des moyens pour recevoir (35) un jeton d'identification émis par le générateur de jetons (9) en réponse au chargement par le terminal de l'utilisateur (3) d'une page Web en provenance du serveur Web (5), le jeton d'identification comprenant une adresse réseau associée à un horodatage indiquant le moment où l'adresse réseau a été utilisée par le terminal de l'utilisateur (3) ;
• l'unité de traitement de réseau (11) comprend des moyens pour accéder à la base de données, qui sauvegarde des informations concernant le moment où le terminal de l'utilisateur a utilisé une adresse réseau spécifique ;
• l'unité de traitement de réseau (11) comprend des moyens pour recevoir (41) des informations d'authentification de l'utilisateur associées à l'adresse réseau et à l'horodatage en provenance de la base de données, les informations d'authentification de l'utilisateur comprenant un identifiant d'utilisateur de réseau de communication unique ;
• l'unité de traitement de réseau (11) comprend des moyens pour envoyer (43) les informations d'authentification de l'utilisateur au serveur Web (5) pour authentifier le terminal de l'utilisateur (3).
